# FASCICULE DE BREVET EUROPEEN

(11) **EP 4 388 949 B1**
(45) Date de publication et mention de la délivrance du brevet: **09.09.2026**
(21) Numéro de dépôt: 23217560.4
(22) Date de dépôt: 18.12.2023
(51) Int. Cl.: A47J 37/06

(54) **APPAREIL DE PREPARATION CULINAIRE**
VORRICHTUNG ZUR ZUBEREITUNG VON SPEISEN
FOOD PREPARATION APPARATUS

(30) Priorité: 19.12.2022 FR 2213827
(43) Date de publication de la demande: 26.06.2024
(73) Titulaire: SEB S.A., 69130 Ecully (FR)
(72) Inventeur: FORNECKER, Florent, 69134 Ecully Cedex (FR)
(74) Mandataire: SEB Développement

(56) Documents cités:
- FR-A1- 2 539 021
- US-A- 5 642 658
- US-B2- 10 105 007

## Description

### Domaine technique de l'invention

La présente invention concerne de manière générale les appareils à grillades et leur utilisation. En particulier, l'invention concerne les appareils à grillades domestiques, et plus particulièrement les appareils à grillades domestiques que l'on peut utiliser à l'intérieur de la maison, communément dénommés grill viande.

### État de la technique

Dans l'art antérieur des appareils de préparation culinaire, on connait les appareils à grillades, comme celui divulgué dans les documents EP2861110B1 et US5642658A.

Cependant, ces appareils sont souvent dédiés à ce seul type de cuisson, ce qui peut poser un frein à leur utilisation, car il faut prévoir de préparer un accompagnement avec un autre appareil, ce qui peut compliquer la tâche et/ou encombrer l'espace de la cuisine.

### Exposé de l'invention

Un but de la présente invention est de répondre aux inconvénients de l'art antérieur mentionnés ci-dessus et en particulier, tout d'abord, de proposer un appareil à grillade qui puisse servir à préparer un plat complet, c'est-à-dire une viande grillée et son accompagnement.

Pour cela un premier aspect de l'invention concerne un appareil de préparation culinaire comprenant :
- une première structure,
- une deuxième structure, mobile par rapport à la première structure entre une position de cuisson et une position d'ouverture,
- un espace de grillage, défini entre la première structure et la deuxième structure dans la position de cuisson, et agencé pour recevoir des premiers aliments à griller,
- des moyens de chauffage, agencés pour chauffer et/ou griller les premiers aliments reçus dans l'espace de grillage,
- une enceinte de cuisson, agencée pour recevoir des deuxièmes aliments à cuire, lesdits moyens de chauffage sont également agencés au moins en partie pour chauffer et/ou cuire les deuxièmes aliments reçus dans l'enceinte de cuisson.

L'appareil de préparation culinaire selon la mise en œuvre ci-dessus comprend en plus de l'espace de grillage une enceinte de cuisson qui permet de préparer un accompagnement. On peut noter que l'appareil de préparation culinaire est prévu pour cuire et/ou chauffer l'accompagnement avec les mêmes moyens de chauffage (au moins en partie) que ceux utilisés pour chauffer et/ou griller une viande dans l'espace de grillage. On peut considérer que l'enceinte de cuisson forme un four qui peut recevoir toute sorte d'accompagnement (des légumes, des pommes de terre, un gratin...) et que ce four est au moins partiellement chauffé par des moyens de chauffage dédiés pour également griller les premiers aliments dans l'espace de grillage.

Selon un mode de réalisation, les moyens de chauffage sont agencés pour simultanément :
- chauffer et/ou griller les premiers aliments reçus dans l'espace de grillage
- chauffer les deuxièmes aliments reçus dans l'enceinte de cuisson. On peut noter que l'appareil de préparation culinaire est prévu pour simultanément cuire et/ou chauffer l'accompagnement avec les mêmes moyens de chauffage (au moins en partie) que ceux utilisés pour chauffer et/ou griller une viande dans l'espace de grillage. Ainsi, une partie de chaleur générée par les moyens de chauffage dédiés à l'espace de grillage est utilisée pour maintenir au chaud ou cuire les deuxièmes aliments : les pertes de chaleur sont réduites. Autrement dit, au moins une partie desdits moyens de chauffage est agencée pour simultanément :
- chauffer et/ou griller les premiers aliments reçus dans l'espace de grillage
- chauffer et/ou cuire les deuxièmes aliments reçus dans l'enceinte de cuisson.

Selon un mode de réalisation, les moyens de chauffage peuvent être agencés au moins en partie entre l'espace de grillage et l'enceinte de cuisson. Au lieu de prévoir une isolation entre l'espace de grillage et l'enceinte de cuisson, il est prévu de pouvoir laisser passer vers l'enceinte de cuisson au moins une partie de chaleur des moyens de chauffage dédiés à l'espace de grillage. Typiquement, la partie de chaleur des moyens de chauffage dédiés à l'espace de grillage qui passe vers l'enceinte de cuisson est de la chaleur émise par rayonnement. On peut prévoir en particulier qu'au moins une partie des moyens de chauffage dédiés à l'espace de grillage peuvent être directement en regard avec l'enceinte de cuisson.

Selon un mode de réalisation, l'espace de grillage et l'enceinte de cuisson peuvent être superposés. Une telle structure est aisée à fabriquer et offre une bonne compacité, avec une empreinte réduite sur le plan de travail et une optimisation de la hauteur du produit du fait de la mutualisation des moyens de chauffage entre l'espace de grillage et l'enceinte de cuisson.

Selon un mode de réalisation, la première structure peut comprendre au moins une plaque de cuisson, de préférence amovible, pour chauffer et/ou griller les premiers aliments, et les moyens de chauffage peuvent être agencés au moins en partie entre la plaque de cuisson et l'enceinte de cuisson. Selon un mode de réalisation, l'enceinte de cuisson est délimitée au moins en partie par la plaque de cuisson. Autrement dit, au moins une plaque de cuisson de l'espace de grillage forme une paroi de l'enceinte de cuisson, ce qui simplifie la structure globale.

Selon un mode de réalisation, les moyens de chauffage peuvent être agencés au moins en partie dans l'enceinte de cuisson. Ainsi, une partie de chaleur générée par les moyens de chauffage dédiés à l'espace de grillage est directement utilisée pour maintenir au chaud ou cuire les deuxièmes aliments : les pertes de chaleur sont encore plus réduites.

Selon l'invention, les moyens de chauffage peuvent comprendre :
- au moins un premier élément chauffant agencé dans la première structure pour chauffer et/ou griller les premiers aliments reçus dans l'espace de grillage et pour chauffer les deuxièmes aliments reçus dans l'enceinte de cuisson,
et au moins un élément de chauffage choisi parmi, et de préférence tous les éléments de chauffage choisis parmi :
- au moins un élément chauffant de couvercle, agencé dans la deuxième structure pour chauffer et/ou griller les premiers aliments,
- au moins un élément chauffant de socle, agencé sous l'enceinte de cuisson pour chauffer les deuxièmes aliments.

Selon un mode de réalisation :
- ledit au moins un premier élément chauffant peut être une résistance électrique,
- ledit au moins un élément chauffant de couvercle peut être une résistance électrique,
- ledit au moins un élément chauffant de socle peut être une résistance électrique.

Alternativement, un ou plusieurs des éléments de chauffage ci-dessus peut être (ou peut être complété avec) une source de chauffage par convection. On peut prévoir un ventilateur de soufflage.

Selon l'invention, l'espace de grillage peut être agencé entre l'au moins un premier élément chauffant et l'au moins un élément chauffant de couvercle. Autrement dit, l'espace de grillage est chauffé par deux éléments chauffant distincts. Selon ce mode de réalisation, parmi le premier élément chauffant et l'élément chauffant de couvercle, seul le premier élément chauffant est agencé pour chauffer (de manière principale) l'espace de grillage et (de manière incidente) l'enceinte de cuisson.

Selon l'invention, l'enceinte de cuisson peut être agencée entre l'au moins un premier élément chauffant et l'au moins un élément chauffant de socle. Autrement dit, l'enceinte de cuisson peut être chauffée par deux éléments chauffant distincts.

Selon un mode de réalisation, la deuxième structure peut former un couvercle articulé sur la première structure.

Selon l'invention, l'appareil de préparation culinaire peut comprendre un bac de cuisson prévu pour être reçu de manière amovible dans l'enceinte de cuisson et pour recevoir les deuxièmes aliments à cuire.

Selon un mode de réalisation, le bac de cuisson peut comprendre un réservoir de rétention, et l'appareil de préparation culinaire peut comprendre un canal d'évacuation de jus, agencé entre l'espace de grillage et le réservoir de rétention du bac de cuisson reçu dans l'enceinte de cuisson. Un tel canal d'évacuation de jus peut être prévu pour guider des jus de cuisson excédentaires depuis l'espace de grillage vers le réservoir de rétention.

Selon l'invention, la première structure peut comprendre :
- une première interface d'accouplement de bac pour recevoir le bac de cuisson entre la première structure et la deuxième structure,
- une deuxième interface d'accouplement de bac pour recevoir le bac de cuisson dans l'enceinte de cuisson. Selon cette mise en œuvre, on peut utiliser dans un premier temps le bac de cuisson sur la première interface d'accouplement pour cuire les deuxièmes aliments avec toute la puissance électrique de l'espace de grillage, et dans un deuxième temps, on place le bac de cuisson sur la deuxième interface d'accouplement pour maintenir au chaud les deuxièmes aliments, tandis que l'on peut passer au gril les premiers aliments dans l'espace de grillage.

Selon un mode de réalisation, la deuxième structure peut être mobile entre la position d'ouverture et :
- une position intermédiaire de cuisson, dans laquelle la deuxième structure est prévue pour coiffer le bac de cuisson reçu par la première interface d'accouplement, et
- la position de cuisson, dans laquelle la deuxième structure définit l'espace de grillage en coopération avec la première structure, le bac de cuisson étant reçu par la deuxième interface d'accouplement ou retiré de l'appareil de préparation culinaire.

Selon un mode de réalisation, l'appareil de préparation culinaire peut comprendre des moyens support, agencés entre l'espace de grillage et l'enceinte de cuisson, et prévus pour supporter au moins en partie les moyens de chauffage prévus pour chauffer et/ou griller les premiers aliments reçus dans l'espace de grillage et pour chauffer les deuxièmes aliments reçus dans l'enceinte de cuisson,
et les moyens support sont ajourés pour laisser passer de la chaleur émise par les moyens de chauffage vers l'enceinte de cuisson et/ou vers l'espace de grillage.

Selon un mode de réalisation, l'appareil de préparation culinaire peut comprendre des moyens de mesure d'une épaisseur à cuire des premiers aliments, et/ou des moyens de mesure d'une température dans l'espace de grillage et/ou dans l'enceinte de cuisson, et/ou une interface homme machine et/ou des moyens de commande agencés pour piloter les moyens de chauffage, et/ou des moyens de stockage agencés pour stocker des instructions de commande des moyens de chauffage.

Selon un mode de réalisation, l'appareil de préparation culinaire peut comprendre :
- une ou plusieurs plaques de cuisson amovibles pour recevoir, chauffer et/ou griller les premiers aliments dans l'espace de grillage, et/ou,
- un ou plusieurs bacs de cuisson amovibles pour recevoir, chauffer les deuxièmes aliments dans l'enceinte de cuisson.

Selon un mode de réalisation, l'appareil de préparation culinaire peut comprendre un boîtier avec une paroi prévue pour confiner et/ou cacher les moyens de chauffage.

Préférentiellement, l'appareil de préparation culinaire est un grill viande.

### Description des figures

D'autres caractéristiques et avantages de la présente invention apparaîtront plus clairement à la lecture de la description détaillée qui suit d'un mode de réalisation de l'invention donné à titre d'exemple nullement limitatif et illustré par les dessins annexés, dans lesquels :
La [fig. 1] représente une vue générale en perspective d'un appareil de préparation culinaire définissant un espace de grillage et une enceinte de cuisson ;
la [fig. 2] représente une vue en coupe schématique d'une première mise en œuvre de l'appareil de préparation culinaire de la figure 1 ;
la [fig. 3] représente une vue en coupe schématique d'une deuxième mise en œuvre de l'appareil de préparation culinaire de la figure 1 ;
la [fig. 4] représente une vue en coupe schématique d'une variante de l'appareil de préparation culinaire de la figure 3.

### Description détaillée de mode(s) de réalisation

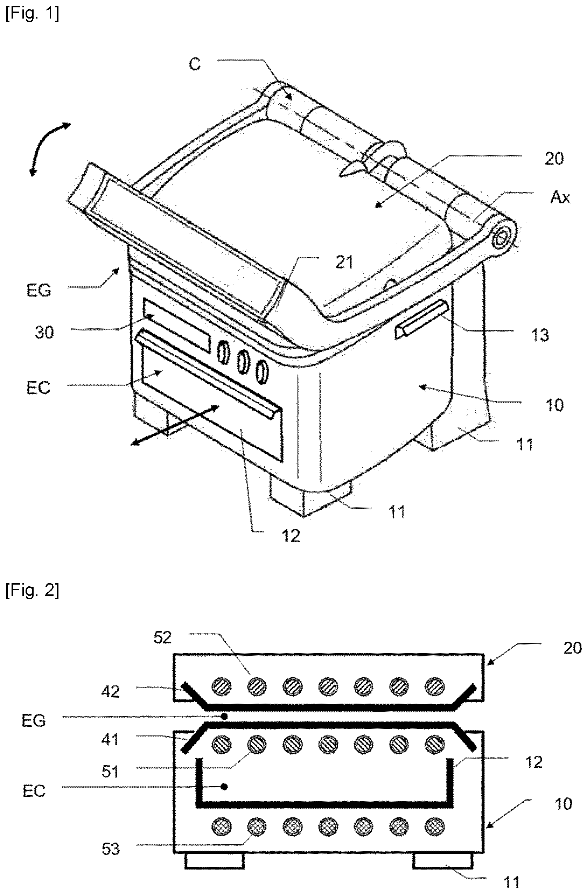

La figure 1 représente une vue générale en perspective d'un appareil de préparation culinaire comprenant :
- une première structure 10 formant un socle avec des pieds 11,
- une deuxième structure 20 formant un couvercle de l'appareil de préparation culinaire et mobile par rapport à la première structure 10 entre une position de cuisson (figure 1) et une position d'ouverture (comme le montre la flèche figure 1),
- une charnière C formant une articulation pour permettre une rotation d'axe Ax entre la première structure 10 et la deuxième structure 20,
- une poignée 21 solidaire de la deuxième structure 20 pour ouvrir et fermer le couvercle formé par la deuxième structure,
- une interface homme machine 30 prévue pour commander l'appareil de préparation culinaire, comprenant par exemple un écran et des boutons de commande et agencée en façade de l'appareil de préparation culinaire,
- un espace de grillage EG, défini entre la première structure 10 et la deuxième structure 20 dans la position de cuisson de la figure 1, et agencé pour recevoir des premiers aliments à griller comme par exemple une pièce de viande,
- une enceinte de cuisson EC formée ici par un tiroir 12 coulissant dans la première structure 10, et agencée pour recevoir des deuxièmes aliments à cuire comme par exemple un accompagnement aux premiers aliments (des légumes, un gratin, des pommes de terre...)
- un bac à jus formé dans cet exemple par un tiroir latéral 13 agencé sous l'espace de grillage EG.

L'appareil de préparation culinaire de la figure 1 est prévu pour chauffer et/cuire simultanément des premiers aliments dans l'espace de grillage EG et des deuxièmes aliments dans l'enceinte de cuisson EC. Un seul appareil peut donc servir à préparer un plat complet (la viande grillée et son accompagnement), ce qui simplifie la tâche de l'utilisateur avec un seul appareil à utiliser. On peut aussi noter que l'espace de grillage EG et l'enceinte de cuisson EC sont superposés, ce qui procure une construction compacte et un accès aisé tout aussi bien à l'espace de grillage EG qu'à l'enceinte de cuisson EC, depuis une même façade de l'appareil de préparation culinaire. Toutefois, on pourrait prévoir d'autres mises en œuvre avec l'espace de grillage EG et l'enceinte de cuisson EC décalés, ou inversés par rapport à la construction de la figure 1.

L'espace de grillage EG est défini entre la première structure 10 et la deuxième structure 20. Comme le montre la figure 1, il suffit d'ouvrir le couvercle (la deuxième structure 20) pour accéder à l'espace de grillage EG et y placer les premiers aliments à cuire. L'appareil de préparation culinaire de la figure 1 comprend une charnière C pour permettre une rotation entre la première structure 10 et la deuxième structure 20, mais on peut prévoir tout autre type de cinématique (translation, combinaison d'une rotation et d'une translation, mouvement ...) avec des coulisses, des bielles ou des leviers articulés...

L'appareil de préparation culinaire comprend un tiroir latéral 13 situé sous l'espace de grillage EG pour récupérer des jus de cuisson. Typiquement, le tiroir latéral 13 est placé sous une plaque de cuisson de l'espace de grillage EG, en regard d'un trou d'évacuation qui peut laisser les jus de cuisson du gril s'écouler dans le tiroir latéral 13. Alternativement, on peut prévoir un bac de rétention dans le tiroir 12 de l'enceinte de cuisson EC, placé sous un canal d'évacuation de jus, qui permet aux jus de cuisson de l'espace de grillage EG de s'écouler depuis une plaque de cuisson de l'espace de grillage EG vers le bac de rétention dans le tiroir 12. Le tiroir latéral 13 peut être situé plutôt en partie arrière de l'appareil de préparation culinaire, comme sur la figure 1, ou vers l'avant, c'est-à-dire juste derrière ou dessous l'interface homme machine 30. On peut même prévoir ce tiroir de récupération des jus en face avant, au-dessus ou à côté du tiroir 12 de l'enceinte de cuisson EC.

L'enceinte de cuisson EC est typiquement un espace clos ménagé dans la première structure 10. Le tiroir 12 (formant un bac de cuisson) permet de rapidement y introduire des deuxièmes aliments pour les chauffer et/ou cuire comme dans un four par exemple. Le tiroir 12 est prévu coulissant, mais on pourrait prévoir d'autres types de structure comme par exemple un pivot d'axe vertical avec ouverture/fermeture tambour, ou un système combinant des mouvements de translation et de rotation, ou même une première structure 10 en plusieurs pièces qui s'ouvre en portefeuille...

L'appareil de préparation culinaire de la figure 1 comprend typiquement une unité de commande électronique prévu pour commander le fonctionnement. L'interface homme-machine 30 permet à un utilisateur de choisir un type de fonctionnement (on peut proposer à l'utilisateur de sélectionner une recette, un type de cuisson, un type d'aliment...). En fonction du choix de l'utilisateur, des premiers aliments dans l'espace de grillage EG et des deuxièmes aliments dans l'enceinte de cuisson EC, l'unité de commande pilote l'appareil de préparation culinaire pour effectuer un chauffage et/ou une cuisson appropriés. L'appareil de préparation culinaire peut comprendre des moyens de mesure de température dans l'espace de grillage EG, et/ou dans l'enceinte de cuisson EC pour moduler le pilotage de l'appareil de préparation culinaire. On peut aussi prévoir des moyens de mesure d'une épaisseur à cuire des premiers aliments dans l'espace de grillage EG pour y moduler spécifiquement le chauffage et/ou la cuisson.

La figure 2 représente une vue en coupe schématique d'une première mise en œuvre de l'appareil de préparation culinaire de la figure 1. La première structure 10 comprend le tiroir 12 placé dans l'enceinte de cuisson EC, et une première plaque de cuisson 41 placée au-dessus de l'enceinte de cuisson EC, pour définir une face inférieure de l'espace de grillage EG. La deuxième structure 20 comprend quant à elle une deuxième plaque de cuisson 42 pour définir une face supérieure de l'espace de grillage EG.

Comme expliqué ci-dessus, l'appareil de préparation culinaire est prévu pour chauffer et/ou cuire les aliments. A cet effet, L'appareil de préparation culinaire comprend des moyens de chauffage. La figure 2 montre une première mise en œuvre, avec les moyens de chauffage qui comprennent :
- un premier élément chauffant 51 agencé dans la première structure 10 pour chauffer et/ou griller les premiers aliments reçus dans l'espace de grillage EG et pour chauffer les deuxièmes aliments reçus dans l'enceinte de cuisson EC,
- un élément chauffant de couvercle 52, agencé dans la deuxième structure 20 pour chauffer et/ou griller les premiers aliments reçus dans l'espace de grillage EG,
- un élément chauffant de socle 53, agencé sous l'enceinte de cuisson EC pour chauffer les deuxièmes aliments reçus dans l'enceinte de cuisson EC.

Les moyens de chauffage peuvent être des résistances électriques comme représenté ici, mais on peut prévoir aussi des moyens de chauffage par convection, qui peuvent être déportés et/ou comprendre un ventilateur de chauffage. On peut aussi prévoir en alternative ou en addition des moyens de chauffage par rayonnement, comme des lampes infrarouges ou halogènes.

On peut noter que le premier élément chauffant 51 est prévu pour chauffer tout aussi bien l'espace de grillage EG que l'enceinte de cuisson EC. En particulier, le premier élément chauffant 51 est positionné dans la première structure 10 entre l'espace de grillage EG et l'enceinte de cuisson EC, si bien que la première plaque de cuisson 41 est chauffée par rayonnement/conduction ou même convection pour cuire les premiers aliments dans l'espace de grillage EG, et le tiroir 12 et son contenu, en regard du premier élément chauffant 51, est également chauffé par ce dernier, au moins par rayonnement.

Ainsi, les moyens de chauffage, en particulier le premier élément chauffant 51, sont prévus pour simultanément :
- chauffer et/ou cuire les premiers aliments reçus dans l'espace de grillage EG,
- chauffer et/ou cuire les deuxièmes aliments reçus dans l'enceinte de cuisson EC. La structure proposée est simple, et les pertes de chaleurs sont minimales.

En ce qui concerne :
- l'élément chauffant de couvercle 52 prévu dans la deuxième structure 20, on peut noter qu'il est prévu pour chauffer et/ou cuire les premiers aliments reçus dans l'espace de grillage EG,
- l'élément chauffant de socle 53 prévu dans la première structure 10 sous l'enceinte de cuisson EC, on peut noter qu'il est prévu pour chauffer et/ou cuire les deuxièmes aliments reçus dans l'enceinte de cuisson EC. Selon la mise en œuvre de la figure 1 :
- l'élément chauffant de couvercle 52 est prévu pour exclusivement chauffer et/ou cuire les premiers aliments reçus dans l'espace de grillage EG,
- l'élément chauffant de socle 53 est prévu pour exclusivement chauffer et/ou cuire les deuxièmes aliments reçus dans l'enceinte de cuisson EC.

L'appareil de préparation culinaire, et en particulier son unité de commande, peut être prévu pour commander de manière indépendante les constituants des moyens de chauffage, c'est-à-dire que le premier élément chauffant 51, l'élément chauffant de couvercle 52 et l'élément chauffant de socle 53 peuvent être commandés indépendamment pour mettre en œuvre des phases de chauffage communes ou distinctes de chaque élément chauffant. Ces phases de chauffage communes ou distinctes peuvent être mises en œuvre en fonction du programme de cuisson, de la recette ou des aliments sélectionnés par l'utilisateur.

En tout état de cause, la commande du premier élément chauffant 51 conduit à simultanément chauffer l'espace de grillage EG et l'enceinte de cuisson EC, ce qui procure une structure simplifiée et des économies d'énergie, tout en offrant la possibilité de cuire/chauffer simultanément les premiers aliments et les deuxièmes aliments.

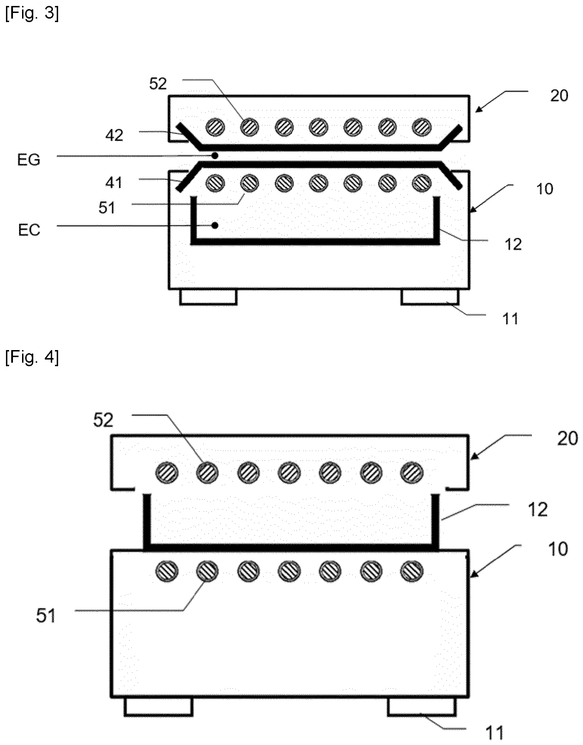

La figure 3 représente une vue en coupe schématique d'une deuxième mise en œuvre de l'appareil de préparation culinaire de la figure 1. Dans cette deuxième mise en œuvre, on peut noter que les moyens de chauffage comprennent uniquement :
- un premier élément chauffant 51 agencé dans la première structure 10 pour chauffer et/ou griller les premiers aliments reçus dans l'espace de grillage EG et pour chauffer les deuxièmes aliments reçus dans l'enceinte de cuisson EC,
- un élément chauffant de couvercle 52, agencé dans la deuxième structure 20 pour chauffer et/ou griller les premiers aliments reçus dans l'espace de grillage EG. Le reste de l'appareil de préparation culinaire est similaire et ne sera pas spécifiquement décrit.

Ainsi, l'enceinte de cuisson EC n'est chauffée que par le premier élément chauffant 51. Par rapport à l'appareil de préparation culinaire de la figure 2, on peut prévoir des puissances de chauffage différentes pour compenser cette différence, ou alors des programmes de cuisson différents. Cependant, comme pour l'appareil de préparation culinaire de la figure 2, la commande du premier élément chauffant 51 conduit à simultanément chauffer l'espace de grillage EG et l'enceinte de cuisson EC, ce qui procure une structure simplifiée et des économies d'énergie, tout en offrant la possibilité de cuire/chauffer simultanément les premiers aliments et les deuxièmes aliments.

La figure 4 représente une vue en coupe schématique d'une variante de l'appareil de préparation culinaire de la figure 3, dans laquelle on peut prévoir de placer le tiroir 12 entre la première structure 10 et la deuxième structure 20 pour chauffer le tiroir 12 et les deuxièmes aliments contenus par le premier élément chauffant 51 et l'élément chauffant de couvercle 52.

La deuxième structure 20 et le mécanisme d'articulation par rapport à la première structure 10 sont adaptés (par l'ajout d'une bielle par exemple) pour permettre à la deuxième structure 20 d'être placée dans une position intermédiaire de cuisson, dans laquelle la deuxième structure 20 est prévue pour coiffer le tiroir 12 comme le montre la figure 4. Ainsi, dans la configuration de la figure 4, les deuxièmes aliments peuvent être par exemple cuits avec toute la puissance du premier élément chauffant 51 et de l'élément chauffant de couvercle 52. Une fois cette opération effectuée, on peut mettre l'appareil de préparation culinaire dans la configuration de la figure 3 pour cuire des premiers aliments dans l'espace de grillage et maintenir au chaud ou finir de cuire les deuxièmes aliments avec le tiroir 12 placé dans l'enceinte de cuisson.

Dans la configuration de la figure 4, l'enceinte de cuisson EC est inoccupée, mais une fois de retour dans la configuration de la figure 3, le premier élément chauffant 51 sert à chauffer l'espace de grillage EG et l'enceinte de cuisson EC.

Pour recevoir :
- le tiroir 12 dans la position montrée figure 4, on peut prévoir une première interface d'accouplement sur l'appareil de préparation culinaire,
- le tiroir 12 dans la position montrée figure 2 ou 3, on peut prévoir une deuxième interface d'accouplement sur l'appareil de préparation culinaire.

La première interface d'accouplement peut être typiquement un posage destiné à recevoir le tiroir 12 sur sa périphérie inférieure pour laisser le premier élément chauffant 51 chauffer directement le fond du tiroir 12. La première interface d'accouplement peut être prévue pour aussi s'accoupler avec la première plaque de cuisson 41, ou à tout le moins permettre le montage de la première plaque de cuisson 41 sur la première structure 10.

La deuxième interface d'accouplement peut être typiquement une paire de glissières destinées à recevoir le tiroir 12 sur ses bords latéraux pour laisser l'élément chauffant de socle 53 chauffer directement le fond du tiroir 12 et/ou laisser le premier élément chauffant 51 chauffer directement le tiroir 12 par le haut.

On peut noter que l'utilisation selon la figure 4 est également possible pour l'appareil de la figure 2, pour profiter d'une puissance de cuisson supérieure, avec désactivation de l'élément chauffant de socle 53.

D'une manière générale, on peut noter que les plaques de cuisson 41 et 42 ainsi que le tiroir 12 sont amovibles, et que l'appareil de préparation culinaire peut comprendre des moyens de détection de présence de chacun de ces éléments pour autoriser ou interdire le fonctionnement général de l'appareil de préparation culinaire, ou même autoriser ou interdire le fonctionnement d'un élément chauffant particulier, en fonction de la présence ou de l'absence de l'un ou l'autre des plaques de cuisson 41 et 42 ainsi que du tiroir 12.

### Application industrielle

Un appareil de préparation culinaire selon la présente invention, et sa fabrication, sont susceptibles d'application industrielle.

On comprendra que diverses modifications et/ou améliorations évidentes pour l'homme du métier peuvent être apportées aux différents modes de réalisation de l'invention décrits dans la présente description sans sortir du cadre de l'invention.

D'une manière générale, on peut noter que l'appareil de préparation culinaire peut comprendre un boitier externe (par exemple en plastique) et des moyens d'isolation thermique pour prévenir tout risque de brûlure de l'utilisateur.

On peut prévoir une grille ou tout autre support ajouré entre le premier élément chauffant 51 et l'enceinte de cuisson EC, pour par exemple procurer un support mécanique au premier élément chauffant 51. Une telle grille ou support ajouré aura pour avantageuse de laisser passer vers l'enceinte de cuisson EC au moins une partie de la chaleur générée par le premier élément chauffant 51. On peut ajuster le taux d'ouverture de la grille pour moduler la chaleur qui peut être transmise à l'enceinte de cuisson EC. On peut aussi prévoir que des parties pleines de la grille servent à rayonner de la chaleur dans l'enceinte de cuisson EC.

On peut prévoir, entre le premier élément chauffant 51 et l'enceinte de cuisson EC, un volet mobile qui :
- dans une première position, occulte au moins partiellement le premier élément chauffant 51 de l'enceinte de cuisson EC (pas de rayonnement direct, donc chauffage modéré) et
- dans une deuxième position, laisse ouvert un passage direct entre le premier élément chauffant 51 et l'enceinte de cuisson EC (un rayonnement direct peut donc passer et chauffer plus fortement, cuire ou griller les deuxième aliments dans le tiroir 12). Le volet mobile peut être monté en liaison glissière avec la grille susmentionnée.

On peut noter que l'enceinte de cuisson EC est délimitée en haut par la première plaque de cuisson 41, en bas par le fond du tiroir 12 ou un support de l'élément chauffant de socle 53, les parties latérales et avant/arrière de l'enceinte de cuisson EC pouvant être définies et/ou délimitées par le tiroir 12. Alternativement ou en complément, les parties latérales et avant/arrière de l'enceinte de cuisson EC peuvent aussi être délimitées par le boîtier de la première structure 10.

L'interface homme machine 30 prévue pour commander l'appareil de préparation culinaire est agencée en façade de l'appareil de préparation culinaire, mais on peut envisager de la placer à d'autres endroits et/ou sous d'autres formes.

## Revendications

1. Appareil de préparation culinaire comprenant :
- une première structure (10),
- une deuxième structure (20), mobile par rapport à la première structure (10) entre une position de cuisson et une position d'ouverture,
- un espace de grillage (EG), défini entre la première structure (10) et la deuxième structure (20) dans la position de cuisson, et agencé pour recevoir des premiers aliments à griller,
- des moyens de chauffage (51, 52, 53), agencés pour chauffer et/ou griller les premiers aliments reçus dans l'espace de grillage (EG),
- une enceinte de cuisson (EC), agencée pour recevoir des deuxièmes aliments à cuire,
lesdits moyens de chauffage (51, 52, 53) étant également agencés au moins en partie pour chauffer et/ou cuire les deuxièmes aliments reçus dans l'enceinte de cuisson (EC), et
les moyens de chauffage (51, 52, 53) comprenant :
- au moins un premier élément chauffant (51) agencé dans la première structure (10) pour chauffer et/ou griller les premiers aliments reçus dans l'espace de grillage (EG) et pour chauffer les deuxièmes aliments reçus dans l'enceinte de cuisson (EC),
- au moins un élément chauffant de couvercle (52), agencé dans la deuxième structure (20) pour chauffer et/ou griller les premiers aliments,
- au moins un élément chauffant de socle (53), agencé sous l'enceinte de cuisson (EC) pour chauffer les deuxièmes aliments,
l'espace de grillage (EG) étant agencé entre l'au moins un premier élément chauffant (51) et l'au moins un élément chauffant de couvercle (52), et
l'enceinte de cuisson (EC) étant agencée entre l'au moins un premier élément chauffant (51) et l'au moins un élément chauffant de socle (53),
**caractérisé par**
- un bac de cuisson prévu pour être reçu de manière amovible dans l'enceinte de cuisson (EC) et pour recevoir les deuxièmes aliments à cuire, la première structure (10) comprend:
- une première interface d'accouplement de bac pour recevoir le bac de cuisson entre la première structure (10) et la deuxième structure (20),
- une deuxième interface d'accouplement de bac pour recevoir le bac de cuisson dans l'enceinte de cuisson (EC).

2. Appareil de préparation culinaire selon la revendication 1, dans lequel au moins une partie desdits moyens de chauffage (51, 52, 53) est agencée pour simultanément :
- chauffer et/ou griller les premiers aliments reçus dans l'espace de grillage (EG),
- chauffer et/ou cuire les deuxièmes aliments reçus dans l'enceinte de cuisson (EC).

3. Appareil de préparation culinaire selon l'une des revendications 1 à 2, dans lequel les moyens de chauffage (51, 52, 53) sont agencés au moins en partie entre l'espace de grillage (EG) et l'enceinte de cuisson (EC).

4. Appareil de préparation culinaire selon l'une des revendications 1 à 3, dans lequel l'espace de grillage (EG) et l'enceinte de cuisson (EC) sont superposés.

5. Appareil de préparation culinaire selon l'une des revendications 1 à 4, dans lequel la première structure (10) comprend au moins une plaque de cuisson, de préférence amovible, pour chauffer et/ou griller les premiers aliments, et dans lequel les moyens de chauffage (51, 52, 53) sont agencés au moins en partie entre la plaque de cuisson et l'enceinte de cuisson (EC).

6. Appareil de préparation culinaire selon l'une des revendications 1 à 5, dans lequel les moyens de chauffage (51, 52, 53) sont agencés au moins en partie dans l'enceinte de cuisson (EC).

7. Appareil de préparation culinaire selon l'une des revendications 1 à 6, dans lequel la deuxième structure (20) forme un couvercle articulé sur la première structure (10).

8. Appareil de préparation culinaire selon l'une des revendications 1 à 7 dans lequel la deuxième structure (20) est mobile entre la position d'ouverture et :
- une position intermédiaire de cuisson, dans laquelle la deuxième structure (20) est prévue pour coiffer le bac de cuisson reçu par la première interface d'accouplement, et
- la position de cuisson, dans laquelle la deuxième structure (20) définit l'espace de grillage (EG) en coopération avec la première structure (10), le bac de cuisson étant reçu par la deuxième interface d'accouplement ou retiré de l'appareil de préparation culinaire.

9. Appareil de préparation culinaire selon l'une des revendications 1 à 8 comprenant des moyens support, agencés entre l'espace de grillage (EG) et l'enceinte de cuisson (EC), et prévus pour supporter au moins en partie les moyens de chauffage (51, 52, 53) prévus pour chauffer et/ou griller les premiers aliments reçus dans l'espace de grillage (EG) et pour chauffer les deuxièmes aliments reçus dans l'enceinte de cuisson (EC),
dans lequel les moyens support sont ajourés pour laisser passer de la chaleur émise par les moyens de chauffage (51, 52, 53) vers l'enceinte de cuisson (EC) et/ou vers l'espace de grillage (EG).

10. Appareil de préparation culinaire selon l'une des revendications 1 à 9 comprenant :
- une ou plusieurs plaques de cuisson amovibles pour recevoir, chauffer et/ou griller les premiers aliments dans l'espace de grillage (EG), et/ou,
- un ou plusieurs bacs de cuisson amovibles pour recevoir, chauffer les deuxièmes aliments dans l'enceinte de cuisson (EC).

## Patentansprüche

1. Küchengerät zur Zubereitung von Speisen, umfassend:
• eine erste Struktur (10),
• eine zweite Struktur (20), die relativ zur ersten Struktur (10) zwischen einer Kochstellung und einer Offenstellung beweglich ist,
• einen Grillraum (EG), der in der Kochstellung zwischen der ersten Struktur (10) und der zweiten Struktur (20) definiert ist und zum Aufnehmen erster zu grillender Lebensmittel eingerichtet ist,
• Heizeinrichtungen (51, 52, 53), die zum Erhitzen und/oder Grillen der im Grillraum (EG) aufgenommenen ersten Lebensmittel eingerichtet sind,
• einen Garraum (EC), der zum Aufnehmen zweiter zu garender Lebensmittel eingerichtet ist,
wobei die Heizeinrichtungen (51, 52, 53) zudem zumindest teilweise zum Erhitzen und/oder Garen der im Garraum (EC) aufgenommenen zweiten Lebensmittel eingerichtet sind, und
wobei die Heizeinrichtungen (51, 52, 53) umfassen:
• mindestens ein erstes Heizelement (51), das in der ersten Struktur (10) angeordnet ist, um die im Grillraum (EG) aufgenommenen ersten Lebensmittel zu erhitzen und/oder zu grillen und die im Garraum (EC) aufgenommenen zweiten Lebensmittel zu erhitzen,
• mindestens ein Deckelheizelement (52), das in der zweiten Struktur (20) angeordnet ist, um die ersten Lebensmittel zu erhitzen und/oder zu grillen,
• mindestens ein Sockelheizelement (53), das unter dem Garraum (EC) angeordnet ist, um die zweiten Lebensmittel zu erhitzen,
wobei der Grillraum (EG) zwischen dem mindestens einen ersten Heizelement (51) und dem mindestens einen Deckelheizelement (52) angeordnet ist, und
wobei der Garraum (EC) zwischen dem mindestens einen ersten Heizelement (51) und dem mindestens einen Sockelheizelement (53) angeordnet ist,
**gekennzeichnet durch**
• eine Garwanne, die zur abnehmbaren Aufnahme im Garraum (EC) und zur Aufnahme der zu garenden zweiten Lebensmittel vorgesehen ist,
wobei die erste Struktur (10) umfasst:
• eine erste Wannen-Kupplungsschnittstelle zum Aufnehmen der Garwanne zwischen der ersten Struktur (10) und der zweiten Struktur (20),
• eine zweite Wannen-Kupplungsschnittstelle zum Aufnehmen der Garwanne im Garraum (EC).

2. Küchengerät zur Zubereitung von Speisen nach Anspruch 1, wobei zumindest ein Teil der Heizeinrichtungen (51, 52, 53) gleichzeitig eingerichtet ist, um:
• die im Grillraum (EG) aufgenommenen ersten Lebensmittel zu erhitzen und/oder zu grillen,
• die im Garraum (EC) aufgenommenen zweiten Lebensmittel zu erhitzen und/oder zu garen.

3. Küchengerät zur Zubereitung von Speisen nach einem der Ansprüche 1 bis 2, wobei die Heizeinrichtungen (51, 52, 53) zumindest teilweise zwischen dem Grillraum (EG) und dem Garraum (EC) angeordnet sind.

4. Küchengerät zur Zubereitung von Speisen nach einem der Ansprüche 1 bis 3, wobei der Grillraum (EG) und der Garraum (EC) übereinander angeordnet sind.

5. Küchengerät zur Zubereitung von Speisen nach einem der Ansprüche 1 bis 4, wobei die erste Struktur (10) mindestens eine Kochplatte, vorzugsweise abnehmbar, zum Erhitzen und/oder Grillen der ersten Lebensmittel umfasst, und wobei die Heizeinrichtungen (51, 52, 53) zumindest teilweise zwischen der Kochplatte und dem Garraum (EC) angeordnet sind.

6. Küchengerät zur Zubereitung von Speisen nach einem der Ansprüche 1 bis 5, wobei die Heizeinrichtungen (51, 52, 53) zumindest teilweise im Garraum (EC) angeordnet sind.

7. Küchengerät zur Zubereitung von Speisen nach einem der Ansprüche 1 bis 6, wobei die zweite Struktur (20) einen Deckel bildet, der an der ersten Struktur (10) angelenkt ist.

8. Küchengerät zur Zubereitung von Speisen nach einem der Ansprüche 1 bis 7, wobei die zweite Struktur (20) zwischen der Offenstellung und:
• einer intermediären Kochstellung beweglich ist, in der die zweite Struktur (20) vorgesehen ist, die von der ersten Kupplungsschnittstelle aufgenommene Garwanne zu überdecken, und
• der Kochstellung, in der die zweite Struktur (20) zusammen mit der ersten Struktur (10) den Grillraum (EG) bildet, wobei die Garwanne von der zweiten Kupplungsschnittstelle aufgenommen oder aus dem Küchengerät zur Zubereitung von Speisen entnommen ist.

9. Küchengerät zur Zubereitung von Speisen nach einem der Ansprüche 1 bis 8, umfassend Trägerelemente, die zwischen dem Grillraum (EG) und dem Garraum (EC) angeordnet und zum zumindest teilweisen Abstützen der Heizeinrichtungen (51, 52, 53) vorgesehen sind, die zum Erhitzen und/oder Grillen der im Grillraum (EG) aufgenommenen ersten Lebensmittel und zum Erhitzen der im Garraum (EC) aufgenommenen zweiten Lebensmittel vorgesehen sind,
wobei die Trägerelemente durchbrochen sind, um Wärme, die von den Heizeinrichtungen (51, 52, 53) abgestrahlt wird, in Richtung des Garraums (EC) und/oder in Richtung des Grillraums (EG) durchzulassen.

10. Küchengerät zur Zubereitung von Speisen nach einem der Ansprüche 1 bis 9, umfassend:
• eine oder mehrere abnehmbare Kochplatten zum Aufnehmen, Erhitzen und/oder Grillen der ersten Lebensmittel im Grillraum (EG), und/oder
• eine oder mehrere abnehmbare Garwannen zum Aufnehmen, Erhitzen der zweiten Lebensmittel im Garraum (EC).

## Claims

1. Food preparation apparatus comprising:
• a first structure (10),
• a second structure (20) which is movable relative to the first structure (10) between a cooking position and an open position,
• a grilling space (EG), defined between the first structure (10) and the second structure (20) in the cooking position, and arranged to receive first food to be grilled,
• heating means (51, 52, 53), arranged to heat and/or grill the first food received in the grilling space (EG),
• a cooking chamber (EC), arranged to receive second food to be cooked,
said heating means (51, 52, 53) being also at least partially arranged to heat and/or cook the second food received in the cooking chamber (EC), and
the heating means (51, 52, 53) comprising:
• at least one first heating element (51) arranged in the first structure (10) to heat and/or grill the first food received in the grilling space (EG) and to heat the second food received in the cooking chamber (EC),
• at least one lid heating element (52), arranged in the second structure (20) to heat and/or grill the first food,
• at least one base heating element (53), arranged under the cooking chamber (EC) to heat the second food,
the grilling space (EG) being arranged between the at least one first heating element (51) and the at least one lid heating element (52), and
the cooking chamber (EC) being arranged between the at least one first heating element (51) and the at least one base heating element (53),
**characterized by**
• a cooking pan designed to be removably received in the cooking chamber (EC) and to receive the second food to be cooked,
the first structure (10) comprising:
• a first pan coupling interface for receiving the cooking pan between the first structure (10) and the second structure (20),
• a second pan coupling interface for receiving the cooking pan in the cooking chamber (EC).

2. Food preparation apparatus according to claim 1, wherein at least a part of said heating means (51, 52, 53) is arranged simultaneously to:
• heat and/or grill the first food received in the grilling space (EG),
• heat and/or cook the second food received in the cooking chamber (EC).

3. Food preparation apparatus according to any one of claims 1 to 2, wherein the heating means (51, 52, 53) are at least partially arranged between the grilling space (EG) and the cooking chamber (EC).

4. Food preparation apparatus according to any one of claims 1 to 3, wherein the grilling space (EG) and the cooking chamber (EC) are superposed.

5. Food preparation apparatus according to any one of claims 1 to 4, wherein the first structure (10) comprises at least one cooking plate, preferably removable, for heating and/or grilling the first food, and wherein the heating means (51, 52, 53) are at least partially arranged between the cooking plate and the cooking chamber (EC).

6. Food preparation apparatus according to any one of claims 1 to 5, wherein the heating means (51, 52, 53) are at least partially arranged in the cooking chamber (EC).

7. Food preparation apparatus according to any one of claims 1 to 6, wherein the second structure (20) forms a lid hinged to the first structure (10).

8. Food preparation apparatus according to any one of claims 1 to 7, wherein the second structure (20) is movable between the open position and:
• an intermediate cooking position, in which the second structure (20) is designed to cap the cooking pan received by the first coupling interface, and
• the cooking position, in which the second structure (20) defines the grilling space (EG) in cooperation with the first structure (10), the cooking pan being received by the second coupling interface or removed from the food preparation apparatus.

9. Food preparation apparatus according to any one of claims 1 to 8, comprising support means arranged between the grilling space (EG) and the cooking chamber (EC), and designed to at least partially support the heating means (51, 52, 53) provided to heat and/or grill the first food received in the grilling space (EG) and to heat the second food received in the cooking chamber (EC),
wherein the support means are openworked so as to allow heat emitted by the heating means (51, 52, 53) to pass towards the cooking chamber (EC) and/or towards the grilling space (EG).

10. Food preparation apparatus according to any one of claims 1 to 9, comprising:
• one or more removable cooking plates for receiving, heating and/or grilling the first food in the grilling space (EG), and/or
• one or more removable cooking pans for receiving, heating the second food in the cooking chamber (EC).
